# FASCICULE DE BREVET EUROPEEN

(11) **EP 0 770 514 B1**
(45) Date de publication et mention de la délivrance du brevet: **06.05.1999**
(21) Numéro de dépôt: 96402263.6
(22) Date de dépôt: 24.10.1996
(51) Int. Cl.: B60N 2/22

(54) **Articulation pour siège de véhicule**
Gelenkbeschlag für Fahrzeugsitze
Hinge mechanism for vehicle seats

(30) Priorité: 27.10.1995 FR 9512723
(43) Date de publication de la demande: 02.05.1997
(73) Titulaire: BERTRAND FAURE EQUIPEMENTS S.A., 92100 Boulogne (FR)
(72) Inventeur: Rohee, René, 61100 La Chapelle-Biche (FR)
(74) Mandataire: Burbaud, Eric

(56) Documents cités:
- FR-A- 2 578 602
- FR-A- 2 673 519
- US-A- 4 384 743

## Description

La présente invention est relative aux articulations pour sièges de véhicules, notamment automobiles, articulations permettant de régler l'inclinaison du dossier du siège par rapport à son assise autour d'un axe horizontal X.

Elle vise plus particulièrement, parmi ces articulations, celles qui comportent :
- un premier flasque et un deuxième flasque, destinés à être solidarisés respectivement avec l'assise du siège et avec le dossier du siège et montés pivotants l'un par rapport à l'autre autour de l'axe X de façon à former un boîtier fermé, le deuxième flasque étant solidaire d'une denture qui s'étend sur au moins un arc de cercle centré sur l'axe X et qui est orientée radialement vers l'intérieur,
- au moins un grain intérieur au boîtier et pourvu d'une denture extérieure propre à coopérer avec la denture du deuxième flasque, ce grain étant guidé en coulissement selon une direction radiale, par un guide solidaire du premier flasque, entre une position de verrouillage où le grain coopère avec la denture du deuxième flasque en bloquant l'articulation, et une position de déverrouillage où il est dégagé de la denture du deuxième flasque,
- une came intérieure au boîtier montée rotative autour de l'axe X pour commander les coulissements radiaux du grain, cette came étant sollicitée par des moyens élastiques vers une position angulaire de repos pour laquelle elle repousse le grain dans sa position de verrouillage,
- et un organe de commande accessible de la personne assise sur le siège pour déplacer la came de sa position de repos vers une position de travail où elle permet au grain de coulisser vers sa position dégagée.

L'invention vise plus particulièrement encore, parmi lesdites articulations, celles qui comprennent :
- d'une part, un pion faisant saillie axialement sur chaque grain,
- et d'autre part, une rampe circulaire à ressauts liée au flasque du dossier et propre à coopérer avec les pions de façon à maintenir positivement les grains en leurs positions dégagées pour des gammes de positions angulaires prédéterminées du dossier.

Une telle construction permet de maintenir l'articulation en sa position déverrouillée, même après lâcher de l'organe de commande des déverrouillages, pour certaines manoeuvres du dossier telles que son rabattement provisoire vers l'avant contre l'assise en vue de dégager l'accès aux places arrière du véhicule.

De telles articulations ont été divulguées par le document FR-B-2 673 519.

Dans les modes de réalisation qui ont été décrits dans ce document, le coulissement de chaque grain vers sa position dégagée est engendré par une petite lame de ressort prenant appui à la fois contre ce grain et contre son logement.

La présence de ces pièces élastiques de faible puissance peut fragiliser l'articulation.

De plus, si une au moins desdites pièces est déplacée ou par trop affaiblie du fait par exemple de son vieillissement, la denture du grain qui lui est associée peut à nouveau venir ou demeurer en prise avec la denture en regard du flasque du dossier, ce qui risque de créer des désordres.

L'invention a pour but, entre autres, de supprimer cet inconvénient et à cet effet de proposer des moyens extrêmement simples pour commander positivement les dégagements des grains dentés lorsque la came est placée en ses positions angulaires de déverrouillage.

A cet effet, les articulations du genre en question selon l'invention sont caractérisées en ce qu'elles comprennent, d'une part, un second pion faisant saillie axialement sur chaque grain et, d'autre part, une plaquette mince solidarisée avec la came et évidée par des lumières propres à coopérer chacune avec l'un desdits seconds pions de façon à commander positivement son déplacement vers l'axe X et son maintien en une position dégagée pour les positions de la came correspondant au déverrouillage de l'articulation, ladite plaque comprenant, entre les deux pions de chaque grain, un pontet avec une portion suffisamment mince pour rendre possibles les débattements radiaux des grains.

Dans des modes de réalisation préférés, on a recours en outre à l'une et/ou à l'autre des dispositions suivantes :
- les deux pions de chaque grain sont formés par semi-estampage de ce grain,
- les saillies axiales respectives des deux pions sur chaque grain sont identiques entre elles,
- les saillies axiales des pions sur chaque grain présentent une épaisseur égale à l'épaisseur de la plaquette ainsi qu'à celle de la rampe,
- la rampe fait corps avec le flasque de dossier, étant venue d'estampage avec ce flasque.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant aux dessins ci-annexés d'une manière bien entendu non limitative.

Les figures 1 et 2, de ces dessins, montrent respectivement en vue latérale, portion coupée transversalement selon I-I, figure 2, et en coupe transversale selon II-II, figure 1, une articulation de siège de véhicule automobile établie selon l'invention, pour sa position déverrouillée permettant un réglage de l'inclinaison du dossier.

La figure 3 montre semblablement à la figure 1 la portion coupée de cette figure 1 pour l'état verrouillé de l'articulation.

La figure 4 montre une autre portion de ladite articulation, coupée transversalement selon IV-IV, figure 2, pour son état bloqué en position déverrouillée lors d'un rabattement du dossier vers l'avant du siège.

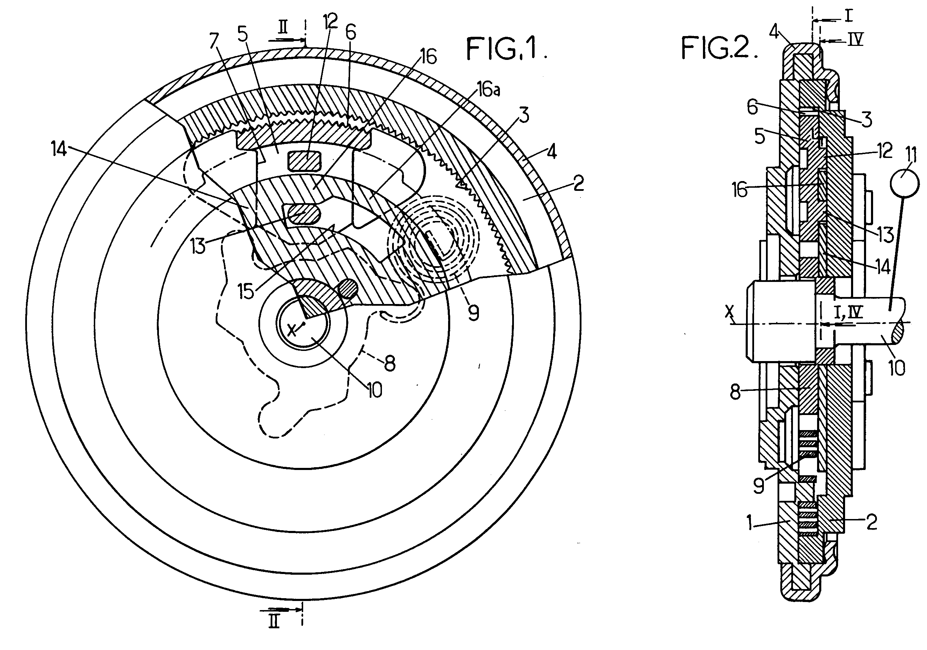

D'une façon connue en soi, l'articulation comprend :
- un premier flasque 1 dit fixe, qui est solidarisable avec l'armature de l'assise du siège,
- un second flasque 2 dit mobile, qui est solidarisable avec l'armature du dossier du siège et qui pivote autour de l'axe de rotation horizontal X de ce dossier, les flasques fixe et mobile formant ensemble un boîtier rond, et le flasque mobile comportant une denture circulaire 3 orientée radialement vers l'intérieur et disposée à l'intérieur du boîtier,
- une couronne de tôle 4 qui est sertie sur le pourtour du flasque fixe 1 et qui recouvre partiellement le flasque mobile 2 pour fermer le boîtier et maintenir les pourtours des deux flasques l'un contre l'autre,
- trois grains métalliques 5 pourvus chacun d'une denture extérieure 6 propre à coopérer avec la denture intérieure 3 du flasque mobile, ces trois grains étant guidés en coulissement radial dans des rainures de guidage 7 ménagées dans le flasque fixe, les directions de coulissement des trois grains étant décalées mutuellement de 120 degrés autour de l'axe X,
- une came 8, rotative autour de l'axe X et agissant sur les trois grains 5, cette came étant déplaçable angulairement entre, d'une part, une position de repos où elle repousse les grains vers une position de verrouillage pour laquelle les dentures extérieures 6 des grains coopèrent avec la denture intérieure 3 du flasque mobile en bloquant ainsi ledit flasque mobile, et d'autre part, une position de travail ou de déverrouillage pour laquelle ladite came permet aux grains 5 de reculer vers une position effacée pour laquelle leurs dentures extérieures sont dégagées de la denture intérieure du flasque mobile,
- trois ressorts 9, ici constitués par des lames enroulées en spirale, qui sollicitent angulairement la came 8 vers sa position angulaire de repos correspondant au verrouillage de l'articulation (ressorts dont un seul a été représenté sur la figure 1, pour simplifier),
- et un arbre 10 d'axe X solidaire de la came 8 et lié à un organe de commande tel qu'une poignée accessible de la personne assise sur le siège et représentée très schématiquement en 11 sur la figure 2.

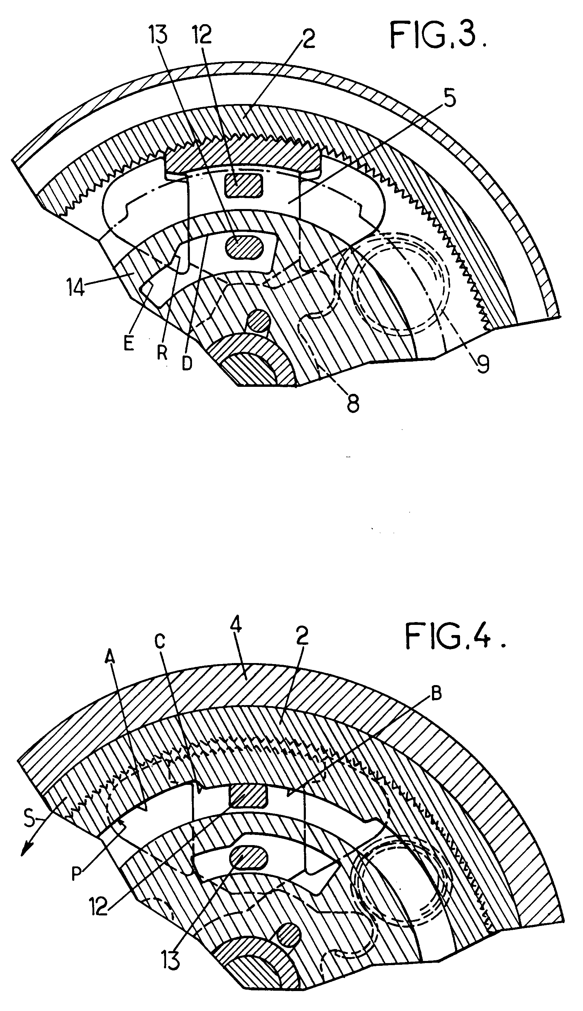

En outre,
- on prévoit sur chaque grain 5 un pion 12 faisant saillie sur ce grain selon la direction de l'axe X,
- et on rend solidaire du flasque mobile 2 une piste P à ressauts entourant les pions 12 (voir figure 4).

Cette piste P comprend des arcs de cercle A et B de diamètres différents centrés sur l'axe X et raccordés entre eux par des tronçons C.

Les diamètres des arcs A et B sont déterminés de façon telle :
- que, lorsqu'un tronçon A de plus grand diamètre se trouve en regard d'un pion 12, celui-ci, et donc le grain correspondant 5, peut décrire la totalité de sa course radiale (voir figures 1 et 3),
- et qu'au contraire, lorsqu'un tronçon B de plus petit diamètre se trouve en regard d'un tel pion 12, après un déplacement angulaire suffisant de la piste P autour de l'axe X selon la flèche S, ledit pion 12 se trouve radialement bloqué par ledit tronçon B en sa position dégagée, la plus proche de l'axe X, correspondant au déverrouillage de l'articulation (voir figure 2).

Cette mesure permet de maintenir les grains 5 en leurs positions dégagées de déverrouillage, même si l'usager relâche la poignée 11 tant que le dossier se trouve en une position inclinée telle qu'une portion d'un arc de cercle B de la piste P se trouve radialement en regard de chacun des pions 12.

Les positions angulaires en question du dossier sont celles pour lesquelles on désire que l'articulation demeure déverrouillée et corresponde par exemple au rabattement du dossier vers l'avant en vue de faciliter l'accès aux places arrière du véhicule, ainsi qu'il est courant pour les véhicules comportant uniquement deux portes latérales.

Le blocage radial des grains 5 créé par la coopération des portions B de la piste P avec les pions 12 est bien entendu automatiquement supprimé dès que des portions des arcs A remplacent les précédentes dans leurs positions radialement en regard des pions 12 : en effet, les pions 12 peuvent alors décrire la totalité de leur course radiale, ce qui permet aux grains 5 d'assurer à nouveau les verrouillages angulaires du dossier.

En outre, conformément à l'invention,
- on prévoit sur chaque grain 5 un second pion 13 faisant saillie sur ce grain selon la direction de l'axe X,
- et on rend solidaire de la came 8 une plaquette mince 14 évidée par des lumières 15 traversées chacune par l'un des seconds pions 13.

Chaque lumière 15 est allongée circonférentiellement autour de l'axe X et son bord le plus éloigné de cet axe présente un ressaut en ce sens qu'il comprend deux arcs de cercle D et E de diamètres différents raccordés entre eux par une rampe oblique R.

Les diamètres des arcs D et E sont déterminés de façon telle :
- que, lorsque l'arc D de plus grand diamètre se trouve radialement en regard du pion 13 correspondant, celui-ci est libre de décrire la totalité de sa course radiale (voir figure 3),
- et qu'au contraire, lorsque l'arc E de plus petit diamètre se trouve en regard du pion, cet arc est alors appliqué radialement contre ce pion et le maintient en sa position la plus proche de l'axe correspondant au déverrouillage de l'articulation (voir figure 1).

Grâce à l'obliquité de la rampe R, une simple rotation de la plaquette 14 permet, par glissement du pion 12 contre cette rampe, de déplacer positivement ce dernier vers sa position dégagée de déverrouillage.

Bien entendu, pour que le débattement radial total de chaque grain soit possible, il convient que la plaquette ajourée 14 comprenne, entre les deux pions 12 et 13 de chaque grain, un pontet 16 présentant une portion 16a suffisamment étroite.

Il est à noter que la plaquette ajourée est logée à l'intérieur du boîtier fermé délimité par les flasques 1 et 2, en compagnie de l'ensemble des éléments suivants : denture interne 3 du flasque mobile 2, grains 5 et leurs dentures 6, guides 7, came 8, ressorts 9 et piste P et que toutes ces pièces y sont automatiquement juxtaposées sans jeu, à glissement doux, sous un encombrement minimum, par suite du simple sertissage de la couronne de tôle 4 sur des portées annulaires périphériques juxtaposées des deux flasques 1 et 2.

Le fonctionnement de l'articulation est en définitive le suivant.

Au repos (figure 3), la came 8 se trouve en sa position angulaire pour laquelle les grains 5 sont en leur position radiale la plus éloignée de l'axe X, avec leurs dentures 6 en prise avec la denture 3 du flasque mobile 2 : le dossier est alors immobilisé.

Pour modifier la position angulaire de ce dossier, l'usager du siège actionne la poignée 11 à l'encontre des efforts de rappel des ressorts 9, ce qui entraîne les deux conséquences suivantes :
- les portions radialement saillantes de la came 8 qui étaient appliquées contre les grains 5 pour les mettre en prise avec la couronne dentée 6 se sont déplacées angulairement, rendant possibles les déplacements radiaux des grains vers l'axe X,
- ces déplacements sont imposés par coopération des lumières 15 de la plaquette 14 avec les pions 13.

En d'autres termes, on observe une commande "positive" du dégagement radial de chaque denture 6 de grain 5 hors de la denture 3 du flasque mobile 2.

Le dossier est alors libre en rotation autour de l'axe X par rapport à l'assise.

L'usager du siège peut alors modifier l'inclinaison angulaire de ce dossier, notamment en faisant pression plus ou moins avec son dos sur ce dossier à l'encontre d'un ressort de rappel approprié, et, lorsque la nouvelle position angulaire désirée est obtenue, il lui suffit de lâcher la poignée 11 : le rappel élastique des ressorts 9 a alors pour effet de ramener l'ensemble formé par la came 8 et par la plaquette 14 qui en est solidaire en sa position angulaire initiale correspondant au verrouillage, position pour laquelle, d'une part, les portions en saillie de la came 8 sont à nouveau appliquées radialement contre les grains 5 et pour laquelle, d'autre part, ce sont les portions radialement élargies des lumières 15 qui coiffent les pions 13, autorisant ainsi les retours des grains en leurs positions radiales les plus éloignées de l'axe.

La commande positive ci-dessus décrite est plus sûre que celle obtenue avec les modes de réalisation antérieurs à l'aide de petits ressorts sollicitant individuellement les grains vers leurs positions centrales et la construction proposée pour obtenir ce résultat est simplifiée du fait qu'elle permet de supprimer les petits ressorts en question.

Dans le mode de réalisation préféré illustré, chacun des deux pions 12 et 13 de chaque grain 5 est obtenu par semi-estampage dudit grain et les saillies des deux pions sur ledit grain sont identiques.

En outre, l'épaisseur de la plaquette 14, qui est égale à la hauteur de chacun des deux pions 12 et 13, est relativement petite, étant notamment de l'ordre du mm.

Enfin, la piste P délimite extérieurement un évidement annulaire pratiqué, également par semi-estampage, dans le flasque de dossier 2, évidement qui présente une profondeur, comptée sur la direction de l'axe X, qui est aussi égale à l'épaisseur de la plaquette 14.

En suite de quoi et quel que soit le mode de réalisation adopté, on dispose d'une articulation de siège de véhicule dont la constitution et le fonctionnement résultent suffisamment de ce qui précède.

Cette articulation présente un certain nombre d'avantages par rapport à celles antérieurement connues, et en particulier celui d'une construction particulièrement ramassée et robuste, l'ensemble du mécanisme à l'exception de l'organe de commande étant constitué par un empilage axial et sans jeu de pièces plates contenu à l'intérieur d'un boîtier fermé, ainsi que celui d'un fonctionnement extrêmement sûr, vu qu'elle rend possibles :
- non seulement un maintien automatique des grains dentés en leur position déverrouillée, même lors des lâchers de la poignée de commande, pour les positions angulaires du dossier pour lesquelles un verrouillage serait indésirable,
- mais aussi une commande positive des dégagements radiaux des grains dentés hors de la denture du flasque mobile, lors des commandes de déverrouillage.

## Revendications

1. Articulation pour siège de véhicule, permettant de régler l'inclinaison du dossier du siège par rapport à son assise autour d'un axe horizontal X, comportant :
- un premier flasque (1) et un deuxième flasque (2), destinés à être solidarisés respectivement avec l'assise du siège et avec le dossier du siège et montés pivotants l'un par rapport à l'autre autour de l'axe X de façon à former un boîtier fermé, le deuxième flasque étant solidaire d'une denture (3) qui s'étend sur au moins un arc de cercle centré sur l'axe X et qui est orientée radialement vers l'intérieur,
- au moins un grain (5) intérieur au boîtier et pourvu d'une denture extérieure (6) propre à coopérer avec la denture du deuxième flasque, ce grain étant guidé en coulissement selon une direction radiale, par un guide (7) solidaire du premier flasque, entre une position de verrouillage où le grain coopère avec la denture du deuxième flasque en bloquant l'articulation, et une position de déverrouillage où il est dégagé de la denture du deuxième flasque,
- une came (8) intérieure au boîtier montée rotative autour de l'axe X pour commander les coulissements radiaux du grain, cette came étant sollicitée par des moyens élastiques (9) vers une position angulaire de repos pour laquelle elle repousse le grain dans sa position de verrouillage,
- et un organe de commande (11) accessible de la personne assise sur le siège pour déplacer la came de sa position de repos vers une position de travail où elle permet au grain de coulisser vers sa position dégagée, l'articulation comportant en outre, d'une part, un pion (12) faisant saillie axialement sur chaque grain, et d'autre part, une rampe circulaire à ressauts (P) liée au flasque du dossier et propre à coopérer avec les pions (12) de façon à maintenir positivement les grains (5) en leurs positions dégagées pour des gammes de positions angulaires prédéterminées du dossier,
**caractérisée en ce qu**' elle comprend, d'une part, un second pion (13) faisant saillie axialement sur chaque grain et, d'autre part, une plaquette mince (14) solidarisée avec la came (8) et évidée par des lumières (15) propres à coopérer chacune avec l'un desdits seconds pions de façon à commander positivement son déplacement vers l'axe X et son maintien en une position dégagée pour les positions de la came correspondant au déverrouillage de l'articulation, ladite plaque comprenant, entre les deux pions (12 et 13) de chaque grain, un pontet (16) avec une portion (16a) suffisamment mince pour rendre possibles les débattements radiaux des grains.

2. Articulation selon la revendication 1, dans laquelle les deux pions (12 et 13) de chaque grain (5) sont formés par semi-estampage de ce grain.

3. Articulation selon la revendication 2, dans laquelle les saillies axiales respectives des deux pions (12 et 13) sur chaque grain (5) sont identiques entre elles.

4. Articulation selon la revendication 3, dans laquelle les saillies axiales des pions sur chaque grain présentent une épaisseur égale à l'épaisseur de la plaquette (14) ainsi qu'à celle de la rampe (P).

5. Articulation selon l'une quelconque des précédentes revendications, dans laquelle la rampe (P) fait corps avec le flasque de dossier (2), étant venue d'estampage avec ce flasque.

## Claims

1. Articulation for a vehicle seat, allowing the inclination of the backrest of the seat to be adjusted with respect to its seat part about a horizontal axis X, including:
- a first cheek (1) and a second cheek (2) which are intended to be secured respectively to the seat part of the seat and to the backrest of the seat and which are mounted so that they can pivot one with respect to the other about the axis X so as to form a closed box, the second cheek being secured to toothing (3) which extends over at least one circular arc centered on the axis X and which toothing points radially inward,
- at least one follower (5) inside the box and provided with external toothing (6) capable of interacting with the toothing of the second cheek, this follower being guided as it slides in a radial direction by a guide (7) secured to the first cheek, between a locked position in which the follower interacts with the toothing of the second cheek, thereby blocking the articulation, and an unlocked position in which it is disengaged from the toothing of the second cheek,
- a cam (8) inside the box and mounted so that it can rotate about the axis X in order to control the radial sliding of the follower, this cam being urged by elastic means (9) toward an angular position of rest for which it pushes the follower back into its locked position,
- and a control member (11) accessible to the person sitting in the seat in order to shift the cam from its position of rest into a working position in which it allows the follower to slide into its disengaged position,
the articulation further including, on the one hand, a peg (12) projecting axially from each follower and, on the other hand, a stepped circular ramp (P) connected to the cheek of the backrest and capable of interacting with the pegs (12) so as positively to hold the followers (5) in their disengaged positions for predetermined ranges of angular positions of the backrest,
**characterized in that** it comprises, on the one hand, a second peg (13) projecting axially from each follower and, on the other hand, a thin plate (14) secured to the cam (8) and cut with openings (15) each capable of interacting with one of said second pegs so as positively to control its shifting toward the axis X and hold it in a disengaged position for those positions of the cam which correspond to the articulation being unlocked, said plate comprising, between the two pegs (12 and 13) of each follower, a bowed bridging piece (16) with a portion (16a) which is thin enough to make the radial excursions of the followers possible.

2. Articulation according to claim 1, in which the two pegs (12 and 13) of each follower (5) are formed by part-stamping this follower.

3. Articulation according to claim 2, in which the respective axial projections of the two pegs (12 and 13) on each follower (5) are mutually identical.

4. Articulation according to claim 3, in which the axial projections of the pegs on each follower have a thickness equal to the thickness of the plate (14) as well as to that of the ramp (P).

5. Articulation according to any one of the preceding claims, in which the ramp (P) forms an integral part of the backrest cheek (2), having been formed by stamping with this cheek.

## Patentansprüche

1. Gelenk für Fahrzeugsitz, welches ermöglicht, die Neigung der Rückenlehne des Sitzes bezüglich seinem Sitz um eine horizontale Achse X einzustellen, mit:
- einem ersten Flansch (1) und einem zweiten Flansch (2), die dazu dienen, mit dem Sitz des Fahrzeugsitzes bzw. mit der Rückenlehne des Sitzes verbunden zu werden und schwenkbeweglich zueinander um die Achse X angebracht zu werden, derart, daß ein geschlossenes Gehäuse gebildet wird, wobei der zweite Flansch mit einer Zahnung (3) verbunden ist, die sich über wenigstens einen Kreisbogen erstreckt, der auf der Achse X zentriert ist, und der radial nach innen ausgerichtet ist.
- wenigstens einem Paßstück (5), das im Inneren des Gehäuses angeordnet und mit einer Außenzahnung (6) versehen ist, die in der Lage ist, mit der Zahnung des zweiten Flansches zusammenzuwirken, wobei das Paßstück gleitgeführt entlang einer radialen Richtung durch eine Führung (7) ist, die mit dem ersten Flansch verbunden ist, zwischen einer Verriegelungsposition, wo das Paßstück mit der Zahnung des zweiten Flansches zusammenwirkt, indem das Gelenk blockiert wird, und einer Löseposition, wo es von der Zahnung des zweiten Flansches gelöst ist,
- einem gegenüber dem Gehäuse inneren Nocken (8), der drehbeweglich um die Achse X montiert ist, um die radialen Gleitbewegungen des Paßstückes zu steuern, wobei dieser Nocken durch elastische Einrichtungen (9) in eine Winkelruhestellung gedrängt wird für die er das Paßstück in seine Verriegelungsstellung zurückdrückt,
- und einem Steurerungsorgan (11), das von der auf dem Sitz sitzenden Person erreichbar ist, um den Nocken von seiner Ruhestellung in eine Arbeitsstellung zu bewegen, wo er dem Paßstück ermöglicht, in seine Löseposition zu gleiten, wobei das Gelenk weiterhin einerseits ein Metallstück oder Pion (pion) (12) aufweist, das axial auf jedes Paßstück vorspringt, und andererseits eine kreisförmige Rampe mit Vorsprüngen (P) aufweist, die mit dem Flansch der Rückenlehne verbunden ist und in der Lage ist, mit den Metallstücken (12) zusammenzuwirken, derart, daß die Paßstücke (5) in ihren losgelösten Positionen für vorbestimmte winkelmäßige Positionsbereiche der Rückenlehne positiv gehalten werden,
dadurch gekennzeichnet,
daß es einerseits ein zweites Metallstück (13) aufweist, das axial auf jedes Paßstück vorspringt, und andererseits eine dünne Platte (14) aufweist, die mit dem Nocken (8) verbunden ist, und mit Ausnehmungen (15) versehen ist, die in der Lage sind, jeweils mit einem der zweiten Metallstücke derart zusammenzuwirken, daß seine Bewegung zur Achse X und sein Halten in einer losgelösten Position für die Positionen des Nockens, die dem Entriegeln des Gelenks entsprechen, positiv gesteuert wird, wobei die Platte zwischen zwei Metallstücken (12 und 13) eines jeden Paßstücks einen Bügel (16) mit einem Abschnitt (16a) aufweist, der ausreichend dünn ist, um die radialen Ausfederungen der Paßstücke möglich zu machen.

2. Gelenk nach Anspruch 1, bei dem die beiden Metallstücke (12 und 13) eines jeden Paßstücks (5) durch Halbprägen (semi-estampage) dieses Paßstücks gebildet werden.

3. Gelenk nach Anspruch 2, bei dem die entsprechenden axialen Vorsprünge der beiden Metallstücke (12 und 13) auf ein jedes Paßstück (5) untereinander identisch sind.

4. Gelenk nach Anspruch 3, bei dem die axialen Vorsprünge der Metallstücke zu jedem Paßstück eine Dicke gleich der Dicke der Platte (14) sowie jene der Rampe (P) aufweisen.

5. Gelenk nach einem der vorhergehenden Ansprüche, bei dem die Rampe (P) einen Körper mit dem Flansch der Rückenlehne (2) bildet, herausgebildet aus dem Prägen mit diesem Flansch.
